# EUROPEAN PATENT SPECIFICATION

(11) **EP 2 644 909 B1**
(45) Date of publication and mention of the grant of the patent: **09.08.2017**
(21) Application number: 13159790.8
(22) Date of filing: 18.03.2013
(51) Int. Cl.: F16B 19/10

(54) **Rivet sleeve, blind rivet arrangement and method for releasing the same**
Niethülse, Blindnietanordnung und Verfahren zum Lösen desselben
Douille de rivet, rivet aveugle, agencement et procédé pour libérer ces derniers

(30) Priority: 27.03.2012 DE 102012006061
(43) Date of publication of application: 02.10.2013
(73) Proprietor: Newfrey LLC, New Britain, CT 06053 (US)
(72) Inventor: Schneider, Stefan, 35394 Giessen (DE)
(74) Representative: Witte, Weller & Partner Patentanwälte mbB

(56) References cited:
- EP-A1- 0 677 665
- EP-A2- 1 734 265
- US-A- 4 541 761

## Description

The present invention relates to a rivet sleeve for a blind rivet arrangement, said rivet sleeve having a sleeve shank and a sleeve head, which is connected to said sleeve shank, the head outside diameter of said sleeve head being greater than a shank outside diameter of the sleeve shank, and which has a head undersurface which points to the sleeve shank, and said rivet sleeve having an axial through-bore for accommodating a mandrel.

In addition, the present invention relates to a blind rivet arrangement having such a rivet sleeve and a mandrel which is inserted into the through-bore. Finally, the present invention relates to a method for releasing a blind rivet arrangement which joins at least two workpieces together and has such a rivet sleeve.

Blind rivet arrangements are used to join workpieces where access is only possible at a visible side of the workpiece arrangement. A hole is drilled into the workpiece arrangement. The blind rivet with the rivet sleeve and the rivet mandrel accommodated therein is inserted through the hole. The mandrel is then pulled out by means of blind riveting pliers which hold the sleeve head of the rivet sleeve on the visible surface. As a result, an end of the rivet sleeve on the blind side is deformed and forms a blind head which abuts against the surface of the workpiece arrangement on the blind side. When a predetermined tensile force is exceeded, the mandrel breaks at a predetermined breaking point, the rest of the mandrel remaining inside the rivet sleeve.

Such types of blind rivet arrangements are used, for example, in the construction of vehicle bodies for automobiles, in the aircraft industry and in many other fields of application.

A problem with blind rivet arrangements is the releasing of the same. A usual method is to drill the sleeve head using a twist drill and to knock the rest of the sleeve towards the blind side out of the join. During the drilling operation swarf is created and this can cause corrosion or other damage to the application. The workplace becomes contaminated. When a tip of the twist drill contacts the rest of the mandrel, which, in the majority of cases, is harder, the drill deflects to the side into the softer rivet sleeve. The drill runs off centre, which can lead to damage to the workpiece arrangement, and to a joint which is not fully released in a circumferential direction. In such cases, the drill has consequently to be applied in an inclined manner or be set into a swaying motion in order to release the sleeve head completely from the rest of the rivet sleeve. In this case, it is also possible for the rivet sleeve to co-rotate in the rivet hole. The only way to drill it out then is by generating a very high contact pressure between the sleeve head to be drilled and the workpiece arrangement.

In some cases, it is no longer possible to release the blind rivet arrangement by drilling at this position. In these cases, other methods have to be used which, as a rule, are very time-consuming and can damage the workpiece arrangement further.

As the releasing of the blind rivet arrangement according to the above-mentioned method frequently results in damage to the workpiece arrangement, it is frequently no longer possible to join the workpieces again by means of the same type of blind rivet. Blind rivet arrangements as joining methods are avoided in many cases for this reason.

A rivet sleeve according to the preamble of claim 1 is known from document EP 0 677 665 A1.

Against this background, it is the object of the invention to provide an improved rivet sleeve, an improved blind rivet arrangement and an improved method for releasing a blind rivet arrangement, at least one of the above-described disadvantages being eliminated.

The above object is achieved by a rivet sleeve according to claim 1, wherein an annular groove, the groove inside diameter of which corresponds to the shank outside diameter, is formed on the head undersurface.

In addition, the above object is achieved by a blind rivet arrangement having such a rivet sleeve and a mandrel which is inserted into the through-bore.

Finally, the above object is achieved by a method for releasing a blind rivet arrangement which joins at least two workpieces together and has such a rivet sleeve, the sleeve head being separated through the annular groove in such a manner that the sleeve head is divided into a remaining head and a remaining ring.

The rivet sleeve according to the invention can be used in the same way as conventional rivet sleeves to produce a blind rivet arrangement.

To release a blind rivet arrangement which has been produced in this manner, it is possible, however, to separate the sleeve head from the sleeve shank through the annular groove. As a result, the sleeve head is divided into a remaining head and a remaining ring, the remaining ring being formed by that section of the sleeve head which is radially outside the annular groove. The two remaining parts of the sleeve head can be removed in a simple manner. In addition, the separating operation is preferably effected such that a small section of the sleeve shank remains protruding with respect to the visible surface of the workpiece arrangement.

The sleeve shank can then be knocked through towards the blind side in a simple manner as in the prior art.

In the case of the method according to the invention, it is particularly advantageous that, on the one hand, said method makes possible a plurality of different separating methods. In addition, the separating operation is possible in such a manner that the workpiece arrangement does not become damaged. Accordingly, a blind rivet arrangement can be produced again preferably at the same position, using, for example, the rivet sleeve according to the invention.

The object is consequently completely achieved.

The groove inside diameter of the annular groove can be somewhat greater than the shank outside diameter of the sleeve shank. This oversize, however, is preferably to be selected such that it is still possible to knock through the sleeve shank (with the rest of the mandrel located therein) when the sleeve head is separated from the sleeve shank.

It is particularly preferred, however, when the groove inside diameter is less than or equal to the shank outside diameter, in particular equal to the shank outside diameter.

In particular in the case of a groove inside diameter which is equal to the shank outside diameter, the remainder of the sleeve shank is able to be knocked through axially towards the blind side in a simple manner. In addition, it is nevertheless possible to achieve a blind rivet arrangement with a high level of strength.

An axial groove depth of the annular groove is preferably greater than 0.1 times an axial head height of the sleeve head.

It is particularly preferred when the axial groove depth is greater than 0.2 times the axial head height of the sleeve head, in particular greater than 0.3 times and in particular greater than 0.4 times.

This measure makes it possible to effect a separating operation through the annular groove without there being any risk of a separating tool contacting the visible surface of the workpiece arrangement.

In addition, it is advantageous when an axial groove depth of the annular groove is less than 0.7 times an axial head height of the sleeve head. It is particularly preferred when the axial groove depth is less than 0.6 times, in particular less than 0.5 times, the axial head height of the sleeve head.

This measure can ensure that high holding forces are able to be taken up by the sleeve head, and in this respect blind rivet arrangements with a high level of strength are able to be produced.

According to the invention, the sleeve head has a flange section, the flange outside diameter of which is greater than the head outside diameter.

The contact surface of the sleeve head on the visible surface of the workpiece arrangement can be enlarged by a flange section of this type such that high holding forces against rotation are possible. In this case, an undersurface of the flange section is preferably aligned in a flush manner with the head undersurface.

In addition, the flange section can preferably be used for the purpose of carrying out a separating operation by means of a tool in a direction at right angles to a longitudinal axis of the blind rivet arrangement, it being possible for the tool to be supported, for example, on a surface of the flange section remote from the visible side. In the case of this embodiment, damage to the visible surface of the workpiece can consequently be completely avoided.

According to the invention, the flange section has an axial flange height which is less than or equal to an axial groove depth of the annular groove, in particular less than the axial groove depth. This can ensure that during a separating operation which is effected in a direction at right angles to the longitudinal axis of the blind rivet arrangement, with a tool being supported on the surface of the flange section, the sleeve head is always separated from the sleeve shank through the annular groove, in such a manner that the sleeve head is divided into the remaining head and the remaining ring.

The sleeve head is preferably M-shaped in longitudinal section, the central V-section of the M-shape being joined to the sleeve shank and the outer portions of the M-shape being designed to abut against the visible surface of the workpiece arrangement.

The rivet head and/or the entire rivet sleeve can be designed so as to be rotationally symmetrical. In this case, it is possible to apply a separating tool independently of the rotational position of the blind rivet. In addition, a rotationally symmetrical design has the advantage of reduced cutting forces as it is possible to separate with a drawing cut. In addition, in the case of a rotationally symmetrical design the surface pressure onto the workpiece arrangement is preferably reduced and uniformly distributed as a result of the larger contact surface.

The sleeve head, however, can also be realized as an anchor. In addition, it is possible to provide a polygonal shape on the outer circumference of the sleeve head. It can be advantageous, in particular, to provide a shape of a polygon on the outer circumference of the sleeve head and/or of the flange section such that a tool is able to be applied as a torque bracket on the sleeve head.

Where a shape of a polygon is developed on the outer circumference of the sleeve head, it can also be ensured that the tool acting as a torque bracket is applied above the flange section such that said tool does not contact the workpiece arrangement and consequently is not able to damage it.

The rivet sleeve and/or the mandrel used with said rivet sleeve can be produced from a metal, however they can also be produced from a plastics material.

In the case of the method according to the invention, it is particularly preferred when the separating operation is effected above a visible surface of the workpieces or of the workpiece arrangement.

Damage to the workpieces during the separating operation can be avoided in this way.

According to one embodiment, the separating operation is effected, in this case, in a direction at right angles to a longitudinal axis of the rivet sleeve.

In this connection, a shearing tool such as a bolt cutter, a side cutter etc., for example, can be used as a tool. As an alternative to this, however, it is also possible to use a metal-cutting tool such as a cutoff wheel which is guided in a direction at right angles to the longitudinal axis of the blind rivet arrangement. The advantage of using a shearing tool is that the build-up of swarf can be reduced.

In this case, it is particularly preferred when the separating operation is effected above a flange section of the sleeve head. In other words, such a tool that is guided in a direction at right angles to the axis of the blind rivet arrangement can be supported on the upper surface of the flange section or can be guided on said surface such that damage to the visible surface of the workpiece which is at a spacing therefrom can be ruled out.

According to an alternative embodiment, the separating operation can be effected by a drilling operation parallel to a longitudinal axis of the rivet sleeve.

In this connection, however, the drill can reach the annular groove and consequently separate the sleeve shank from the sleeve head even before the drill gets to the region of the workpiece arrangement. As a result, even in the case of a releasing operation by means of a drilling tool, damage to the workpiece arrangement can be avoided. The dividing of the sleeve head is preferably effected here such that the remaining head is machined and only the remaining ring remains as a part.

The axial height of the flange section is preferably located within a range of between 0.1 and 0.6 times the head height of the sleeve head.

It is obvious that the aforementioned features and the features yet to be explained below can be used not only in the combination specified in each case, but also in other combinations or on their own without departing from the framework of the present invention.

Exemplary embodiments of the invention are shown in the drawing and are explained in the following description, in which, in more detail:
- Fig. 1: shows a schematic longitudinal sectional view through an embodiment of a rivet sleeve;
- Fig. 2: shows a finished blind rivet arrangement with a rivet sleeve according to an embodiment of the present invention;
- Fig. 3: shows the blind rivet arrangement of Figure 2 when a shearing separating tool is applied;
- Fig. 4: shows the blind rivet arrangement of Figure 3 after a separating operation has been carried out using the shearing separating tool;
- Fig. 5: shows the blind rivet arrangement of Figure 2 during a separating operation by means of a metal-cutting separating tool; and
- Fig. 6: shows a view comparable to Figure 5 after the metal-cutting tool has been withdrawn.

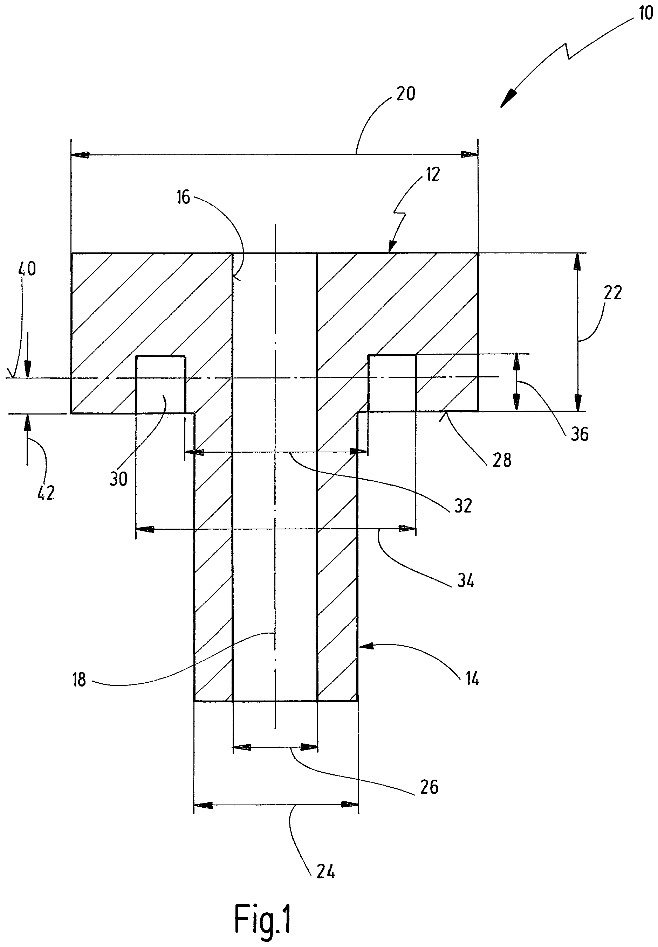

A schematic representation of a longitudinal section of a first embodiment of a rivet sleeve is shown in Figure 1 and is designated in general by the reference 10. The rivet sleeve 10 is realized for producing a blind rivet arrangement and has a sleeve head 12 and a sleeve shank 14. A through-bore 16 extends through the sleeve head 12 and through the sleeve shank 14. The through-bore 16 is aligned along a longitudinal axis 18. In the present case, the rivet sleeve 10 is realized so as to be rotationally symmetrical. The sleeve shank 14 connects to the sleeve head 12 in the axial direction.

The sleeve head 12 has a head outside diameter 20 and an axial head height 22. The sleeve shank 14 has a shank outside diameter 24 which is less than the head outside diameter 20. A diameter of the through-bore 16 is shown at 26.

On account of the smaller shank outside diameter 24, a head undersurface 28, which extends at right angles to the longitudinal axis 18, is realized at the transition between the sleeve shank 14 and the sleeve head 12.

An annular groove 30, which is preferably realized as a closed annular groove, but where applicable also covers an angular region of less than 360°, but preferably greater than 320°, is realized on the head undersurface 28. The annular groove 30 has a groove inside diameter 32 which corresponds to the shank outside diameter 24. In the present case, the groove inside diameter 32 is somewhat greater than the shank outside diameter 24. However, these diameters are preferably of an identical size.

In addition, the annular groove 30 has a groove outside diameter 34 and a groove depth 36.

The axial groove depth of the annular groove is greater than 0.1 times the axial head height 22 of the sleeve head 12 and less than 0.7 times the axial head height 22. The groove outside diameter 34 is less than the head outside diameter 20 and is preferably less than 0.8 times the head outside diameter 20. As a result, a sufficient contact surface of the head undersurface 28 remains for abutting against a visible workpiece surface.

The through-bore 16 serves to accommodate a mandrel of a blind rivet arrangement. A free end of the sleeve shank 14 is realized such that it is deformable by the application of an axial tensile force of a mandrel head such that a blind head can be formed on a blind-side upper surface of a workpiece arrangement to be joined.

The rivet sleeve 10 is preferably realized in one piece and is preferably produced from a metal material; however it can also be produced from a plastics material.

A separating plane 40, which extends at right angles to the longitudinal axis 18, is also shown in Figure 1. The separating plane 40 is located at a separating plane height 42 in relation to the head undersurface 28, this means above a visible workpiece surface in the joined state.

The separating plane height 42 is less than or equal to the axial groove depth 36, in particular less than the axial groove depth 36.

If, once a blind rivet arrangement has been produced by means of the rivet sleeve 10, said blind rivet arrangement is to be released again, a separating operation can be effected along said separating plane 40, the separating operation serving for the purpose of separating the sleeve head 12 from the sleeve shank 14. The separating operation, in this connection, is effected through the annular groove 30. As a result, the sleeve head 12 is subdivided into a remaining head, originally located above the separating plane 40, and a remaining ring, located below the separating plane 40. The two remaining elements are able to be removed simply from the blind rivet arrangement after the separating operation. In addition, there remains a part of the sleeve shank 14 which protrudes axially in relation to the original head undersurface 28 and the outside diameter of which is preferably equal to or only a little greater than the shank outside diameter 24. Consequently, it is subsequently possible to knock through the part of the sleeve shank 14 still located in a bore of the workpiece arrangement towards the blind side, for example by means of a suitable tool such as a hammer or the like. It is obvious, in this case, that with the remaining part of the sleeve shank 14, the rest of the mandrel located therein can also be knocked through towards the blind side.

By carrying out the separating operation in a separating plane 40 which is at a spacing from the head undersurface 28, the separating operation can be effected without a separating tool coming into contact with the visible surface of the joined workpiece arrangement. The separating operation can be effected by means of a metal-cutting tool or by means of a shearing tool. The separating operation can also be effected along a cone surface or the like, the cone surface cutting the cross section of the annular groove 30. In general, it is also possible to align the separating plane 40 at an angle of less than 90° with reference to the longitudinal axis 18 in so far as the annular groove 30 is cut. The separating plane 40, consequently, in the present case, is to be understood rather in principle, as an idealized separating plane or separating axis.

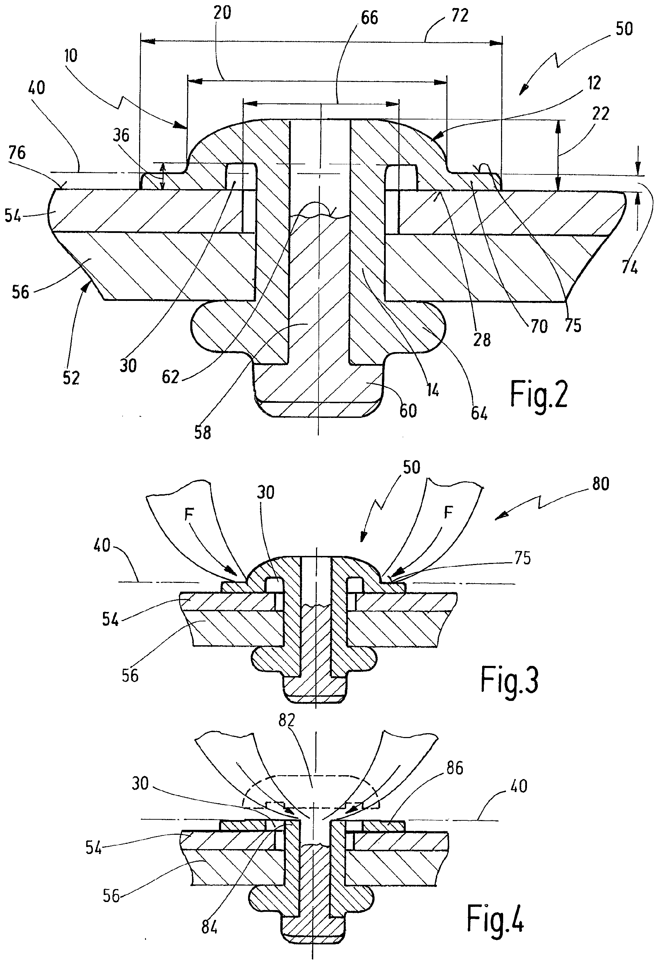

In the following Figures 2 to 6 further embodiments of rivet sleeves or blind rivet arrangements and methods for releasing the same are explained, the rivet sleeves used in this case corresponding in general to the rivet sleeve 10 of Figure 1 as regards design and method of operation. Identical elements, consequently, are qualified by identical references. Explained below are essentially the differences.

Figure 2 shows a blind rivet arrangement 50 which is produced by means of a rivet sleeve 10. The blind rivet arrangement 50 includes a workpiece arrangement 52 which has at least one visible workpiece 54 such as a first plate and one blind-side workpiece 56 such as a second plate. The two workpieces 54, 56 are joined by means of a finished blind rivet arrangement. In this case, the head undersurface 28 of the sleeve head 12 of the rivet sleeve 10 lies on the visible surface of the visible workpiece 54. The sleeve shank 14 extends through a bore in the two workpieces 54, 56. The rest of the mandrel 58, the mandrel head 60 of which abuts against the undersurface or blind surface of a blind head 64, is arranged in the sleeve shank 14. To produce the blind head 64, the mandrel has been pulled in the axial direction in the direction of the visible side, as a result of which the free end of the sleeve shank 14 has deformed to form the blind head 64. When a predetermined force is exceeded, the mandrel is broken at a predetermined breaking point 62 which is located in the axial direction inside the workpiece arrangement 52. The workpiece arrangement 52 is consequently secured in a positive-locking manner in the axial direction between the head undersurface 58 and the blind head 64.

Figure 2 also shows that the visible workpiece 54 can have a bore with a larger diameter 66 than the shank outside diameter 24. Contrary to this, the diameter of the bore in the blind-side workpiece 56 is preferably substantially equal to the shank outside diameter 24.

The sleeve head 12 of the rivet sleeve 10 shown in Figure 2 also has a flange section 70 which provides a radial enlargement of the sleeve head 12. The flange outside diameter 72 is consequently greater than the head outside diameter 20. A flange height 74 is less than the head height 22.

Consequently, the flange section 70 forms a ring-shaped, flat flange upper surface 75 which is spaced from the head undersurface 28 by the flange height 74. The flange height 74 is preferably greater than 0.1 times the head height 22, and preferably greater than 0.25 times the head height 22. The flange height 74 is preferably less than 0.6 times the head height 22, in particular less than 0.5 times the head height 22.

The flange outside diameter 72 is preferably greater than 1.1 times the head outside diameter 20, and preferably greater than 1.2 times the head outside diameter 20, and is preferably less than twice the head outside diameter 20.

The flange height 74 is less than or equal to the axial groove depth 36, in particular less than the axial groove depth 36.

In the case of this embodiment, the separating plane 40 is preferably that plane which is defined by the flange upper surface 75. The separating plane height 42 is consequently equal to the flange height 74. The groove outside diameter 34, which is not shown in any more detail in Figure 2, is preferably less than 1.1 times the head outside diameter 20, preferably less than 1.2 times the head outside diameter 20, and is preferably greater than 0.4 times the head outside diameter 20, in particular greater than 0.5 times the head outside diameter 20.

The above specifications of relative dimensions show preferred embodiments, the aim of which, in particular, is to provide a sleeve head 12 of sufficient strength, at the same time it being possible to release the blind rivet arrangement 50 in a simple manner.

A first variant for releasing said blind rivet arrangement 50 is shown in Figures 3 and 4. Figure 3 shows that a shearing tool 80 such as a side cutter, a bolt cutter or the like can be applied onto the flange surface 75, it being possible by means of said shearing tool to separate the sleeve head from the sleeve shank 14 essentially along the separating plane 40. The forces which, in this connection, act inwards in the radial direction are designated in Figure 3 by F.

Figure 4 shows the end of a shearing operation of this type, from which can be seen that after the shearing process the sleeve head 12 is subdivided into a remaining head 82 and a remaining ring 86. The two remaining parts can be removed in a simple manner from the top side of the workpiece arrangement 52. In addition, it can be seen that the sleeve shank 14 protrudes in relation to the visible surface 76 by the rest of a shank 84. The sleeve shank 14 with the rest of the mandrel 58 located thereon can then be removed from the bores of the workpieces by being knocked out axially towards the blind side.

Applying the shearing tool 80 on the flange top side 75 ensures that no damage is produced on the visible workpiece 54 during the shearing operation. On account of the fact that the shearing operation is not effected in a cutting manner, in addition no swarf or other contaminants occur. Just the remaining parts 82, 86 of the sleeve head 12 have to be disposed of.

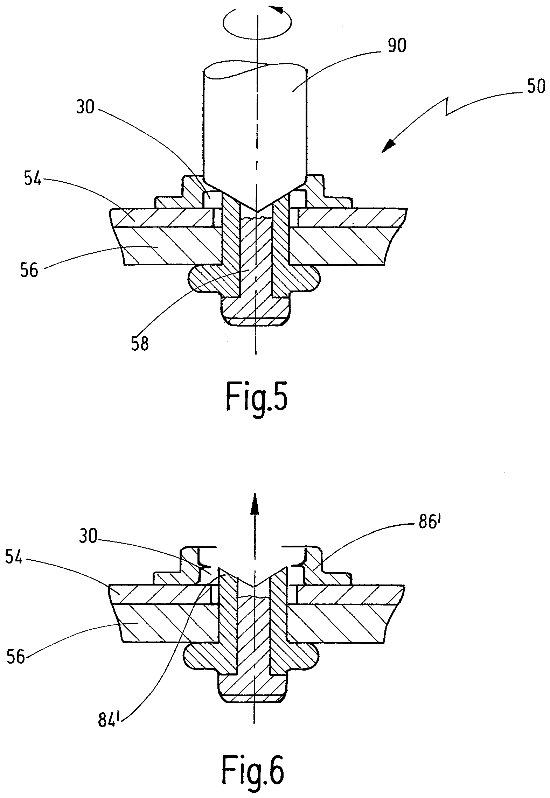

A further variant for releasing the blind rivet arrangement 50 is shown in Figures 5 and 6. In this connection, a drilling tool 90 in the form of a spiral drill is used and is applied in the axial direction. As a result, the sleeve head 12 is machine-cut until the cutting faces of the drilling tool intersect the cross-sectional area of the annular groove 30, as is shown in Figure 5. After the drilling tool 90 has been withdrawn (Fig. 6), a remaining ring 86' is left over which is able to be removed in a simple manner. In addition, protruding in relation to the visible surface of the visible workpiece 54 is the rest of a shank 84', the longitudinal section of which, in the present case, can be realized in a tapering manner. A remaining head has been machine-cut by means of the drilling tool 90. The drilling tool 90 is preferably inserted only so far axially into the blind rivet arrangement 50 that the rest of the mandrel 58 is not contacted. In addition, in the case of this variant of a releasing operation of the blind rivet arrangement 50 too, it is ensured that the surface of the visible workpiece 54 is not damaged.

In the case of the embodiment of Figures 3 and 4, in place of a shearing tool it is also possible to use a metal-cutting cutoff wheel which rotates in a rotational manner or is driven in an oscillating manner and is guided along the separating plane 40.

In the case of the variant of Figures 5 and 6, it is possible to provide a polygonal shape on the outer circumference of the sleeve head 12, it being possible to apply a tool as a torque bracket, for example, on said polygonal shape. As a result, the rivet sleeve 10 can be prevented from rotating inside the bores of the workpieces 54, 56 during the drilling operation.

All in all, it is possible to release a blind rivet arrangement in a short time in a substantially torque-free manner with minimum load on the workpiece arrangement 52 and preferably without causing any swarf.

The sleeve head 12 can preferably be removed in a torque-free manner, the rivet sleeve 10 not co-rotating.

Preferably no swarf occurs, in particular when shearing separating methods are used.

The surface of the workpiece arrangement 52 is protected.

The rivet sleeves 10 can be produced from metal or from plastics material. Special tools are not required. The M-shaped contour of the sleeve head 12 in longitudinal section without undercut enables the rivet sleeve 10 to be produced by means of simple on/off tools, for example by way of cold forming or by means of injection moulding, that is to say without a slide or the like. It is, therefore, possible to produce the rivet sleeve 10, and consequently also a blind rivet arrangement 50 to be produced using said rivet sleeve, in a cost-efficient manner.

## Claims

1. Rivet sleeve (10) for a blind rivet arrangement (50), said rivet sleeve having a sleeve shank (14) and a sleeve head (12), which is connected to said sleeve shank, the head outside diameter (20) of said sleeve head being greater than a shank outside diameter (24) of the sleeve shank (14), and which has a head undersurface (28) which points to the sleeve shank (14), and said rivet sleeve having an axial through-bore (16) for accommodating a mandrel, wherein an annular groove (30), the groove inside diameter (32) of which corresponds to the shank outside diameter (24), is formed on the head undersurface (28), wherein the sleeve head (12) has a flange section (70), the flange outside diameter (72) of which is greater than the head outside diameter (20), and wherein the flange section (70) has an axial flange height (74) which is less an axial height (22) of the sleeve head (12)
**characterized in that** the axial flange height (74) is less than or equal to an axial groove depth (36) of the annular groove (30).

2. Rivet sleeve according to claim 1, **characterized in that** the groove inside diameter (32) is equal to the shank outside diameter (24).

3. Rivet sleeve according to claim 1 or 2, **characterized in that** an axial groove depth (36) of the annular groove (30) is greater than 0.1 times an axial head height (22) of the sleeve head (12).

4. Rivet sleeve according to one of claims 1 to 3, **characterized in that** an axial groove depth (36) of the annular groove (30) is less than 0.7 times an axial head height (22) of the sleeve head (12).

5. Blind rivet arrangement (50) having a rivet sleeve (10) according to one of claims 1 to 4 and a mandrel which is inserted into the through-bore (16).

6. Method for releasing a blind rivet arrangement (50) which joins at least two workpieces (54, 56) together and which has a rivet sleeve (10) according to one of claims 1 to 4, wherein the sleeve head (12) is separated from the sleeve shank (14) through the annular groove (30) in such a manner that the sleeve head (12) is divided into a remaining head (82) and a remaining ring (86).

7. Method according to claim 6, wherein the separating operation is effected above a visible surface (76) of the workpieces (54, 56).

8. Method according to claim 6 or 7, wherein the separating operation is effected in a direction at right angles with respect to a longitudinal axis (18) of the rivet sleeve (10).

9. Method according to claim 8, wherein the separating operation is effected above a flange section (70) of the sleeve head (12).

10. Method according to claim 6 or 7, wherein the separating operation is effected by a drilling operation parallel to a longitudinal axis (18) of the rivet sleeve (10).

## Patentansprüche

1. Niethülse (10) für eine Blindnietanordnung (50), mit einem Hülsenschaft (14) und einem hiermit verbundenen Hülsenkopf (12), dessen Kopfaußendurchmesser (20) größer ist als ein Schaftaußendurchmesser (24) des Hülsenschaftes (14) und der eine zu dem Hülsenschaft (14) weisende Kopfunterseite (28) aufweist, und mit einer axialen Durchgangsbohrung (16) zur Aufnahme eines Dorns, wobei an der Kopfunterseite (28) eine Ringnut (30) ausgebildet ist, deren Nutinnendurchmesser (32) dem Schaftaußendurchmesser (24) entspricht, wobei der Hülsenkopf (12) einen Flanschabschnitt (70) aufweist, dessen Flanschaußendurchmesser (72) größer ist als der Kopfaußendurchmesser (20), und wobei der Flanschabschnitt (70) eine axiale Flanschhöhe (74) aufweist, die kleiner ist als eine axiale Höhe (22) des Hülsenkopfes (12).
**dadurch gekennzeichnet, dass** die axiale Flanschhöhe (74) kleiner gleich einer axialen Nuttiefe (36) der Ringnut (30) ist.

2. Niethülse nach Anspruch 1, **dadurch gekennzeichnet, dass** der Nutinnendurchmesser (32) gleich dem Schaftaußendurchmesser (24) ist.

3. Niethülse nach Anspruch 1 oder 2, **dadurch gekennzeichnet, dass** eine axiale Nuttiefe (36) der Ringnut (30) größer ist als das 0,1-fache einer axialen Kopfhöhe (22) des Hülsenkopfes (12).

4. Niethülse nach einem der Ansprüche 1 bis 3, **dadurch gekennzeichnet, dass** eine axiale Nuttiefe (36) der Ringnut (30) kleiner ist als das 0,7-fache einer axialen Kopfhöhe (22) des Hülsenkopfes (12).

5. Blindnietanordnung (50) mit einer Niethülse (10) nach einem der Ansprüche 1 bis 4 und einem Dorn, der in die Durchgangsbohrung (16) eingeführt ist.

6. Verfahren zum Lösen einer wenigstens zwei Werkstücke (54, 56) miteinander verbindenden Blindnietanordnung (50), die eine Niethülse (10) nach einem der Ansprüche 1 bis 4 aufweist, wobei der Hülsenkopf (12) durch die Ringnut (30) hindurch von dem Hülsenschaft (14) getrennt wird, derart, dass der Hülsenkopf (12) in einen Restkopf (82) und einen Restring (86) geteilt wird.

7. Verfahren nach Anspruch 6, wobei der Trennvorgang oberhalb einer sichtseitigen Oberfläche (76) der Werkstücke (54, 56) erfolgt.

8. Verfahren nach Anspruch 6 oder 7, wobei der Trennvorgang in einer Richtung quer zu einer Längsachse (18) der Niethülse (10) erfolgt.

9. Verfahren nach Anspruch 8, wobei der Trennvorgang oberhalb eines Flanschabschnittes (70) des Hülsenkopfes (12) erfolgt.

10. Verfahren nach Anspruch 6 oder 7, wobei der Trennvorgang durch einen Bohrvorgang parallel zu einer Längsachse (18) der Niethülse (10) erfolgt.

## Revendications

1. Corps de rivet (10) pour un système de rivet aveugle (50), ledit corps de rivet comportant un tronc de corps (14) et une tête de corps (12), qui est raccordée audit tronc de corps, le diamètre extérieur de tête (20) de ladite tête de corps étant supérieur à un diamètre extérieur de tronc (24) du tronc de corps (14), et qui comporte une surface inférieure de tête (28) qui est orientée en direction du tronc de corps (14), et ledit corps de rivet comportant un trou traversant axial (16) destiné à recevoir un clou, une rainure annulaire (30), dont le diamètre intérieur de rainure (32) correspond au diamètre extérieur de tronc (24), étant formée sur la surface inférieure de tête (28), la tête de corps (12) comportant une section formant collerette (70), dont le diamètre extérieur de collerette (72) est supérieur au diamètre extérieur de tête (20), et la section formant collerette (70) présentant une hauteur axiale de collerette (74) qui est inférieure à une hauteur axiale (22) de la tête de corps (12),
**caractérisé en ce que** la hauteur axiale de collerette (74) est inférieure ou égale à une profondeur axiale de rainure (36) de la rainure annulaire (30).

2. Corps de rivet selon la revendication 1, **caractérisé en ce que** le diamètre intérieur de rainure (32) est égal au diamètre extérieur de tronc (24).

3. Corps de rivet selon la revendication 1 ou 2, **caractérisé en ce qu'**une profondeur axiale de rainure (36) de la rainure annulaire (30) est supérieure à 0,1 fois une hauteur axiale de tête (22) de la tête de corps (12).

4. Corps de rivet selon l'une des revendications 1 à 3, **caractérisé en ce qu'**une profondeur axiale de rainure (36) de la rainure annulaire (30) est inférieure à 0,7 fois une hauteur axiale de tête (22) de la tête de corps (12).

5. Système de rivet aveugle (50) comportant un corps de rivet (10) selon l'une des revendications 1 à 4 et un clou qui est inséré dans le trou traversant (16).

6. Procédé de libération d'un système de rivet aveugle (50) qui raccorde au moins deux pièces (54, 56) l'une à l'autre et qui comporte un corps de rivet (10) selon l'une des revendications 1 à 4, dans lequel la tête de corps (12) est séparée du tronc de corps (14) par le biais de la rainure annulaire (30) de telle sorte que la tête de corps (12) soit divisée en une tête restante (82) et une bague restante (86).

7. Procédé selon la revendication 6, dans lequel l'opération de séparation est effectuée au-dessus d'une surface visible (76) des pièces (54, 56).

8. Procédé selon la revendication 6 ou 7, dans lequel l'opération de séparation est effectuée dans une direction à angle droit vis-à-vis d'un axe longitudinal (18) du corps de rivet (10).

9. Procédé selon la revendication 8, dans lequel l'opération de séparation est effectuée au-dessus de la section formant collerette (70) de la tête de corps (12).

10. Procédé selon la revendication 6 ou 7, dans lequel l'opération de séparation est effectuée par une opération de perçage parallèle à un axe longitudinal (18) du corps de rivet (10).
